(19)

Europäisches Patentamt
European Patent Office
Office européen des brevets

(11) **EP 1 900 287 A1**

(12) **EUROPEAN PATENT APPLICATION**

(43) Date of publication:
**19.03.2008 Bulletin 2008/12**

(51) Int Cl.:
***A23G 9/32*** *(2006.01)*

(21) Application number: **07116086.5**

(22) Date of filing: **11.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **14.09.2006 EP 06120698**
**14.09.2006 EP 06120700**

(71) Applicants:
• **UNILEVER PLC**
**London EC4P 4BQ (GB)**
Designated Contracting States:
**CY GB IE MT**

• **UNILEVER N.V.**
**3013 AL Rotterdam (NL)**

(72) Inventor: **UNDERDOWN, Jeffrey**
**Bedford, Bedfordshire MK44 1LQ (GB)**

(74) Representative: **Hugot, Alain et al**
**Unilever Patent Group**
**Colworth House**
**Sharnbrook**
**Bedford, MK44 1LQ (GB)**

(54) **Process for making frozen aerated confection**

(57) A process for making a frozen aerated confection is provided, the process comprising: preparing a mixture comprising water, sugar, protein, and at least 2 wt% milk fat; pasteurising and homogenizing the mixture; ageing the mixture at a temperature of from 0 to 6°C to produce a mix; aerating and at least partially freezing the mix; the milk fat having (by weight of the fatty acids) a SAFA content of at most 60 wt% and a C18:0 content of at least 10 wt%, as well as to a mix for making frozen aerated confections, such as ice cream, based on milk fat which contains a low amount of saturated fatty acids.

EP 1 900 287 A1

**Description**

Technical Field of the Invention

The invention relates to a process for making frozen aerated confections, such as ice cream, based on milk fat which contains a low amount of saturated fatty acids as well as to a mix for making frozen aerated confections, such as ice cream, based on milk fat which contains a low amount of saturated fatty acids.

**Background to the invention**

Milk fat is an essential constituent of frozen aerated dairy confections such as ice cream and frozen yoghurt. Milk fat typically consists of 65% saturated fat (SAFA) and 35% unsaturated fat. In ice cream production, pasteurized, homogenized premix is held at about 4°C for typically 2-4 hours ("aged") before freezing. One purpose of ageing is to allow time for the fat (which is liquid at the pasteurization temperature) to crystallize before the mix is frozen and aerated. Milk fat crystallises relatively easily during the ageing step due to its triglyceride composition to give a relatively high solid content at normal ageing temperatures. This is important because the solid fat results in ice cream which can be aerated uniformly, retains its shape after extrusion and has a good texture when eaten. For example, on page 69 of "Ice Cream" (6th Edition) by Robert T. Marshall, H. Douglas Goff and Richard W. Hartel (2003), it is stated that 50 - 67% of solid fat at 5°C is a good working rule, whereas too much liquid fat results in the collapse of air bubbles and undesirable texture.

Saturated fats are associated with increased risk of coronary heart disease and stroke, whereas unsaturated fats are believed to be healthier. As a result, low SAFA fat sources for frozen aerated confections have been proposed. However, it has not been possible simply to replace the saturated fats in ice cream formulations with unsaturated fats and obtain the desired processing characteristics and texture, because unsaturated fats do not contain sufficient solid fat.

Gonzalez et al. (J. Dairy Science, 86, 70-77, 2003) disclose ice cream made from milk fat containing a reduced amount of saturated fat compared to standard milk fat, obtained by modifying the diets of cows. The milk fat also had a significantly lower solid fat content (measured at 10°C). Gonzalez et al. aged the premix at a lower temperature (-4°C) for a longer time (24 hours) than is conventional. Lower ageing temperatures and longer ageing times will result in an increased amount of solid fat before freezing. However, because this requires increased cooling and / or longer time, it is inconvenient in the factory and adds cost. Thus there remains a need for an improved method for producing frozen aerated confections from low SAFA milk fat.

**Tests and Definitions**

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, Robert T. Marshall, H. Douglas Goff and Richard W. Hartel (2003), Kluwer Academic/Plenum Publishers. All percentages, unless otherwise stated, refer to the percentage by weight, with the exception of percentages cited in relation to the overrun.

Mix

The term "mix" as used in this specification means a pasteurised and homogenized mixture of ingredients that has been subjected to an ageing process. Mixes typically contain all of the ingredients necessary to produce a frozen confection by subsequent freezing. Mixes contain water, fat, one or more sugars, proteins (normally milk proteins), and optionally other ingredients such as emulsifiers, stabilisers, colours and flavours.

Frozen aerated confection

The term "frozen aerated confection" as used in this specification means a frozen confection made by freezing a mix with agitation to incorporate air, for example ice cream.

Milk fat

Milk fat means fat obtained from a dairy source, for example liquid milk, concentrated milk, milk powder, cream, butter, yoghurt and the like. The milk preferably comes from cows, but may also come from other mammals such as sheep, goats, donkeys and buffaloes.

Fatty acid composition

The fatty acid composition of a milk fat is measured by capillary column gas-liquid chromatography as described in Fearon et al, J. Sci Food Agric. 84, 497-504, 2004.

SAFA content

The amount of SAFA in a fat is the percentage by weight of saturated fatty acid residues (i.e. residues which have no carbon-carbon double bonds) in the triglyceride molecules. This is calculated from summing the percentages of each saturated fatty acid from the fatty acid composition. C18:0 fatty acid content
C18:0 fatty acid (also known as stearic acid) is the fatty acid having 18 carbon atoms and no carbon-carbon double bonds. The C18:0 content is determined as part of the fatty acid composition as described above.

Solid fat

The amount of solid fat means the percentage of the fat in solid form (at 5°C unless specified otherwise) as measured by pulse NMR spectroscopy as follows. The fat or fat blend is first heated to 80°C and then held at 60°C for 30 minutes, so that the fat is completely melted. It is then cooled to and held at 0°C for one hour. It is then warmed to the measurement temperature (e.g. 5°C) and held for 30 minutes. The amount of solid fat is then measured with a standard pulse NMR technique using a NMS 120 Minispec NMR spectrometer.

Fat separation

Prior to analysis of the fat composition and solid fat content, the fat is separated from the dairy source (cream, butter etc) using the following procedure.

1. 20g of the sample is heated to above 40°C to ensure that the fat is molten, and placed in a separating funnel to which 40ml of isopropanol is added.
2. After vigorous shaking for 2-3 minutes, 40ml of hexane is added and the mixture is shaken for further 2-3 minutes.
3. The mixture is transferred to a tube and centrifuged at approximately 2000 g for 5 minutes.
4. The upper (hexane) layer is transferred to a second separating funnel.
5. Steps 2 to 4 are repeated on the lower (isopropanol) layer and the supernatant pooled with the previous hexane layer.
6. After addition of 20ml of 0.47 M aqueous $Na_2SO_4$, the upper hexane layer is separated into a flask and evaporated using a rotary evaporator at 40°C.
7. The residue is dissolved in 5 ml hexane and dried with anhydrous sodium sulphate, decanted and evaporated again, to produce the separated fat.

Overrun

Overrun is defined as follows and is measured at atmospheric pressure

$$\text{overrun \%} = \frac{\text{density of mix - density of frozen confection}}{\text{density of frozen confection}} \times 100$$

**Brief Description of the Invention**

It has now been found, contrary to what had been previously thought, that good quality ice cream can be made from low SAFA milk fat without modifying the standard ageing process, in particular without requiring a lower ageing temperature than is conventional. Accordingly, the present invention provides a process for making a frozen aerated confection, the process comprising:

(i) preparing a mixture comprising water, sugar, protein, and at least 2 wt% milk fat;
(ii) pasteurising and homogenizing the mixture;
(iii) ageing the mixture at a temperature of from 0 to 6°C to produce a mix;

(iv) aerating and at least partially freezing the mix;

the milk fat having (by weight of the fatty acids) a SAFA content of at most 60 wt% and a C18:0 content of at least 10 wt%.

Preferably the ageing temperature is from 2 to 5°C.

Preferably the mixture is aged for from 1 to 6 hours.

Preferably the milk fat has a SAFA content of at most 56 wt%.

Preferably the milk fat has a C18:0 content of at least 12 wt%.

Preferably the milk fat has a solid fat content at 5°C of from 35 to 50 wt%.

Preferably the mix comprises from 4 to 15 wt% milk fat.

Preferably the mix comprises from 2 to 8 wt% milk protein.

Preferably the mix is aerated to an overrun of from 50 to 150%

Furthermore, the present invention relates to a mix for making a frozen aerated confection, the mix comprising water, sugar, protein, and at least 2 wt% milk fat, the milk fat having (by weight of the fatty acids) a SAFA content of at most 60 wt%, a C18:0 content of at least 10 wt% and a solid fat content of from 35 to 50 wt%, measured at the temperature at which the mix has been aged.

As already mentioned above, the term "mix" is defined as a pasteurised and homogenized mixture of ingredients that has been subjected to an ageing process.

The temperature, which is used for the ageing process, is between 0 - 6°C, preferably between 2 to 5°C.

The ageing process is carried out for about 1 to 6 hours.

Preferably the milk fat has a SAFA content of at most 56 wt%.

Preferably the milk fat has a C18:0 content of at least 12 wt%.

Preferably the milk fat has a solid fat content of at least 40 wt% measured at the temperature at which the mix has been aged.

Preferably the mix comprises from 4 to 15 wt% milk fat.

Preferably the mix comprises from 2 to 8 wt% milk protein.

This mix is then aerated and at least partially frozen to obtain a frozen aerated confection.

The mix is aerated preferably to an overrun of 50 to 100%.

In a related aspect, the present invention provides products obtained by the processes of the invention, and products obtainable by the processes of the invention.

## Detailed Description of the Invention

### Frozen aerated confections

Frozen aerated confections include ice cream, frozen yoghurt and the like. Ice cream typically contains, by weight of the composition, 2-20% fat, 6-12% non-fat milk solids which consists mostly of milk protein and lactose, 12-18% other sugars together with other minor ingredients such as stabilisers, emulsifiers, colours and flavourings. The conventional manufacturing process for frozen aerated confections consists of a number of steps: (i) mixing the ingredients, (ii) pasteurisation and homogenisation, (iii) ageing the mixture to produce a mix, (iv) aerating and partially freezing the mix, (v) extrusion from the freezer, and (vi) hardening. This process is described in detail in, for example, Ice Cream, 6th Edition, chapters 6-9.

Frozen aerated confections (and mixes from which they are produced) comprise milk fat. The milk fat content is at least 2%, preferably at least 4%, more preferably at least 7%. Preferably the milk fat content is at most 20%, more preferably at most 15%, most preferably at most 12%.

The milk fat has a SAFA content (by weight of the fatty acids) of at most 60%, preferably at most 56%, more preferably at most 54%, even more preferably at most 52% and most preferably at most 50%. The lower the SAFA content, the greater the health benefit.

The milk fat has a C18:0 content (by weight of the fatty acids) of at least 10%, preferably at least 11 %, more preferably at least 12%, even more preferably at least 13% and most preferably at least 14%.

Preferably the milk fat has a solid fat content at 5°C (by weight of the fatty acids) of from 35 to 50%, more preferably from 40 to 50%.

We have found that milk fats satisfying these criteria produce good quality ice creams without requiring a lower ageing temperature or a longer time than is conventional. Thus the ageing temperature is from 0 to 6°C, preferably from 2 to 5°C. Preferably the ageing time is less than 12 hours, more preferably from 1 to 6 hours, most preferably from 1 to 4 hours. It is believed (without wishing to be limited by theory) that this is a result of the specific fatty acid composition of the milk fat, in particular a relatively high proportion of C18:0 fatty acids. Low SAFA milk fats having the required fatty acid composition can be obtained by dietary intervention, as described for example in Fearon et al, J. Sci Food Agric. 84, 497-504, 2004. Fractionation, which is an alternative route for preparing low SAFA milk fats, results in fatty acid compositions which do not satisfy these criteria. In particular, while fractionation reduces the SAFA content, it also reduces the amount of C18:0 fatty acids.

Frozen aerated confections (and mixes from which they are produced) comprise protein, preferably milk protein. Suitable sources of milk protein include milk, concentrated milk, milk powders, whey, whey powders and whey protein concentrates/isolates. In order to aid in emulsification and/or aeration during manufacture of the frozen confection it is preferable that the protein content is greater than 2% by weight. In order to prevent the texture of the confection from becoming chalky, it is also preferable that the protein content is less than 8% by weight.

Frozen aerated confections (and mixes from which they are produced) also contain sugars. The sugar is typically a mono-, di-, or oligo-saccharide or sugar alcohol for instance, sucrose, dextrose, fructose, lactose (for example from milk solids), purified lactose, lactose monohydrate, glucose syrup, invert sugar, corn syrup, fructose, erythritol arabitol, xylitol, sorbitol, glycerol, mannitol, lactitol and maltitol or mixtures thereof. In order to provide freezing point depression and contribute to the sweetness of the confection it is preferred that the sugar content is at least 5%, more preferably at least 8% and most preferably at least 10% by weight. To avoid the confection being too sweet, it is preferred that the confection comprises at most 25% sugars, more preferably at most 20% and most preferably at most 18% by weight. Preferably a blend of sugars is used; more preferably one of the sugars is sucrose.

Frozen aerated confections (and mixes from which they are produced) may comprise an emulsifier, such as mono- and di-glycerides of saturated or unsaturated fatty acids, lecithin and egg yolk. Typically the emulsifier is present at a level of 0.05 to 1 % by weight.

Frozen aerated confections (and mixes from which they are produced) may also comprise a stabiliser, such as gelatine, locust bean gum, guar gum, agar, alganates, carrageenan, pectin, carboxymethyl cellulose, microcrystalline cellulose, dextran and xanthan. Preferably the stabiliser is present at a level of 0.05 to 1 % by weight.

In addition the frozen aerated confections (and mixes from which they are produced) may contain flavouring and/or colouring, such as mint, vanilla, chocolate, coffee, or fruit flavours. Pieces of nut, chocolate, ginger, biscuit, fruit, fruit and the like may also be included, but it will be understood that these are not to be included when determining the fat composition and content, protein content etc. of the mix.

The frozen confection is aerated with a gas such as air. Frozen aerated confections have an overrun of more than 20%, preferably more than 50%, more preferably more than 75%. Preferably the frozen confection has an overrun of less than 200%, more preferably less than 150%, most preferably less than 120%.

The present invention will be further described in the following examples and comparative examples in which compositions demonstrating various facets of the invention were prepared. The examples are by way of illustration only, and are not to limit the invention.

Example 1 Production of low SAFA milk fat by dietary intervention in cows

Thirty-two mid-late lactation Holstein Friesian dairy cows were assigned to one of four dietary treatments supplying 0, 400, 600 and 800g rapeseed oil (in the form of whole rapeseeds) / cow / day over an eight week period. The feed trial was conducted as described in detail in J. Sci Food Agric. 84, 497-504, 2004.

The effects of dietary treatment on milk yield and composition (in particular fatty acid composition) were determined by sampling and analysing the milk from all animals individually on a weekly basis. Following extraction of the milk fat, the fatty acid composition and solid fat contents were determined, using the methods described above.

Inclusion of rapeseed oil up to 600g / day did not affect milk yield. At 800g / day milk yield was reduced by about 10%, but the milk fat and protein concentrations in the milk were not affected. Behavioural observation assessments supported the view that the diets were not stressful to the cows. The effect on milk fat composition was established by the second week of the trial and persisted for the remaining six weeks. A minimum of 300 litres of milk per dietary treatment was collected over four consecutive milkings during week 4, pasteurized and separated into cream (37-40% fat). The cream was blast frozen and held at -20°C until required for ice cream production. The total SAFA content of the milk fat decreased from 64% with the control diet (0g rapeseed oil / day) to 48% with the highest level of rapeseed oil (800g / day) while the unsaturated fat content correspondingly increased from 36% to 52%. The amounts of SAFA, C18:0 and solid fat at 5 °C and -5 °C for each dietary treatment are shown in Table 1.

**Table 1**

**Table 1**

| Rapeseed (g / cow / day) | 0 | 400 | 600 | 800 |
|---|---|---|---|---|
| Saturated fat (wt%) | 63.8 | 54.2 | 55.1 | 47.5 |
| C18:0 (wt%) | 10.1 | 12.1 | 12.7 | 14.7 |
| Solid fat at 5°C (wt%) | 55.1 | 42.9 | 46.5 | 41.6 |

(continued)

| Rapeseed (g / cow / day) | 0 | 400 | 600 | 800 |
|---|---|---|---|---|
| Solid fat at -5°C (wt%) | 63.7 | 54.3 | 57.2 | 53.5 |

The control sample (0g) has a solid fat content at 5°C of 55%, whereas the low SAFA samples have solid fat contents of from 41 to 47%, i.e. below the amount conventionally considered necessary to make good ice cream. The solid fat contents of the low SAFA samples measured at -5°C range from 53 to 57%, i.e. very similar to the solid fat content of the control sample at 5°C.

Example 2 Ice Creams

Four ice creams were prepared according to the formulation given in Table 2 using the four creams from example 1.

Table 2

**Table 2**

| Ingredient | Amount (% by weight) |
|---|---|
| Cream | 12.65 |
| Skimmed milk powder | 10.00 |
| Sucrose | 11.00 |
| Dextrose (anhydrous) | 9.00 |
| Emulsifier (MGP) | 0.35 |
| Sodium alginate | 0.23 |
| Vanillin | 0.002 |
| Vanillin flavour | 0.03 |
| Water | to 100 |

The ice creams were prepared as follows. Water was placed in a jacketed tank at 85°C, then all the ingredients except for the flavours were dissolved by mixing with a high shear mixer. Hot water was circulated in the jacket of the tank to maintain a temperature of 65°C. The mixture was heated using a plate heat exchanger to a temperature of 83°C and homogenised using a the first stage of a Crepaco double stage valve homogeniser at a pressure of 140 bar. After holding the mixture at 82 to 85°C for 12 seconds, the mixture was cooled using a tubular heat exchanger to 4°C and aged at this temperature for 2-3 hours before adding the flavour. The mix was frozen in a continuous ice cream freezer (APV Technohoy MF75) fitted with an open dasher rotating at a speed of 370 to 400 rpm and operating with a barrel pressure in the range 1-4 bar. The ice creams were produced with a mix flow rate of between 0.6 and 0.63 litres/minute, with an overrun of 100% and an extrusion temperature of-6.3°C.

All of the mixes processed well: they could reliably be aerated to 100% overrun and were smooth and dry on extrusion. Ice creams were collected in 500 ml waxed paper cartons and then hardened in a blast freezer at -35°C for a period of 2 hours. The hardened ice creams were then stored at -25°C until required for sensory testing.

The ice creams were assessed by a trained sensory panel consisting of 15 panellists who had been screened and selected for their sensory acuity. The panel had been trained in describing and objectively assessing the sensory attributes of a range of ice cream products. The day before panelling the blocks were cut into equally sized portions which were placed into pots. The samples were then tempered to the serving temperature (-18°C) for 24 hours prior to panelling. The panellists consumed samples of each product and assessed a number of attributes related to texture and flavour. The test design was balanced for serving order of the samples, and each product was assessed (blind) 3 times by each assessor. A series of data and panellist monitoring techniques were performed on the data output, and these indicated that a robust dataset had been obtained. No significant differences were found in any of the sensory attributes between the control sample (0g) and the low SAFA samples (400, 600 and 800g).

Example 3 Ice creams made with butter

Ice creams were prepared using a standard butter (Meadow Foods Ltd, Marlston-cum-Lache, Chester, UK) and a commercially available low SAFA butter (Dromona Pure Butter, supplied by Dale Farm Ltd, Belfast, N. Ireland).

The amounts of SAFA, C18:0 and solid fat at 5°C and -5°C of each butter were measured as described above and are shown in Table 3.

Table 3

**Table 3**

|  | Standard butter | Low SAFA butter |
|---|---|---|
| Saturated fat (wt%) | 69.5 | 54.8 |
| C18:0(wt%) | 10.0 | 14.3 |
| Solid fat at 5°C (wt%) | 59.9 | 45.8 |
| Solid fat at -5°C (wt%) | 67.7 | 55.6 |

The low SAFA butter has a solid fat content of 46% at 5°C, i.e. below the amount conventionally considered necessary to make good ice cream. The solid fat content of the low SAFA butter measured at -5°C is 56%, i.e. similar to the solid fat content of the standard butter at 5°C (60%).

Ice creams were made using the standard butter and the low SAFA butter using the formulation in Table 4 and the same process as in example 2. Both of the mixes processed well: they could reliably be aerated to 100% overrun and were smooth and dry on extrusion. They were collected in 500 ml waxed paper cartons and then hardened in a blast freezer at -35°C for a period of 2 hours. The hardened ice creams were then stored at -25°C until required for sensory testing.

Table 4

**Table 4**

| Ingredient | Amount (% by weight) |
|---|---|
| Butter | 5.5 |
| Skimmed milk powder | 13.0 |
| Sucrose | 16.8 |
| Emulsifier (MGP) | 0.22 |
| Locust bean gum | 0.2 |
| Vanillin | 0.002 |
| Vanillin flavour | 0.0142 |
| Water | to 100 |

The ice creams were also assessed by the trained sensory panel as described in example 2. The standard and low SAFA ice creams were found to have very similar sensory properties, although the ice cream made with the low SAFA butter was slightly smoother in texture.

Conclusions

All of the ice creams of examples 2 and 3 produced according to the invention processed well and there was little difference in texture or flavour between ice cream made with standard milk fat and low SAFA milk fat. Thus, contrary to what was previously thought, good quality ice cream can be made from mixes containing low SAFA milk fat, without ageing at low temperatures or for very long times.

The various features of the embodiments of the present invention referred to in individual sections above apply, as appropriate, to other sections *mutatis mutandis.* Consequently features specified in one section may be combined with features specified in other sections as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. A process for making a frozen aerated confection, the process comprising:

    (i) preparing a mixture comprising water, sugar, protein, and at least 2 wt% milk fat;
    (ii) pasteurising and homogenizing the mixture;
    (iii) ageing the mixture at a temperature of from 0 to 6°C to produce a mix; (iv)aerating and at least partially freezing the mix;

    the milk fat having (by weight of the fatty acids) a SAFA content of at most 60 wt% and a C18:0 content of at least 10 wt%.

2. A process according to claim 1 wherein the ageing temperature is from 2 to 5°C.

3. A process according to claim 1 or claim 2 wherein the mixture is aged for from 1 to 6 hours.

4. A process according to any of claims 1 to 3 wherein the milk fat has a SAFA content of at most 56 wt%.

5. A process according to any of claims 1 to 4 wherein the milk fat has a C18:0 content of at least 12 wt%.

6. A process according to any of claims 1 to 5 wherein the milk fat has a solid fat content at 5°C of from 35 to 50 wt%.

7. A process according to any of claims 1 to 6 wherein the mix comprises from 4 to 15 wt% milk fat.

8. A process according to any of claims 1 to 7 wherein the mix comprises from 2 to 8 wt% milk protein.

9. A process according to any of claims 1 to 8 wherein the mix is aerated to an overrun of from 50 to 150%

10. A mix for making a frozen aerated confection, comprising water, sugar, protein, and at least 2 wt% milk fat, the milk fat having (by weight of the fatty acids) a saturated fatty acid (SAFA) content of at most 60 wt%, a C18:0 content of at least 10% and a solid fat content of from 35 to 50 wt% measured at the temperature at which the mix has been aged.

11. A mix according to claim 10 wherein the milk fat has a SAFA content of at most 56 wt%.

12. A mix according to claim 10 or claim 11 wherein the milk fat has a C18:0 content of at least 12 wt%.

13. A mix according to any of claims 10 to 12 wherein the milk fat has a solid fat content of at least 40 wt% measured at the temperature at which the mix has been aged.

14. A mix according to any of claims 10 to 13 which comprises from 4 to 15 wt% milk fat.

15. A mix according to any of claims 10 to 14 which comprises from 2 to 8 wt% milk protein.

European Patent
Office

## EUROPEAN SEARCH REPORT

Application Number

EP 07 11 6086

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 497 841 A (WUDEL JOHN A [US] ET AL) 5 February 1985 (1985-02-05) * claims * * examples * | 1-15 | INV. A23G9/32 |
| X | US 5 084 295 A (WHELAN RICHARD H [US] ET AL) 28 January 1992 (1992-01-28) * the whole document * | 1-15 | |
| X,P | EP 1 716 762 A (UNILEVER PLC [GB]; UNILEVER NV [NL]) 2 November 2006 (2006-11-02) * the whole document * | 1-15 | |
| Y | WO 92/13465 A (CONAGRA INC [US]) 20 August 1992 (1992-08-20) * the whole document * | 1-15 | |
| Y | EP 1 673 980 A (UNILEVER PLC [GB]; UNILEVER NV [NL]) 28 June 2006 (2006-06-28) * the whole document * | 1-15 | TECHNICAL FIELDS SEARCHED (IPC) A23G |
| Y | WO 95/24132 A (KRAFT FOODS INC [US]) 14 September 1995 (1995-09-14) * the whole document * | 1-15 | |
| A | US 5 112 626 A (HUANG VICTOR T [US] ET AL) 12 May 1992 (1992-05-12) * the whole document * | 1-15 | |

The present search report has been drawn up for all claims

| Place of search | Date of completion of the search | Examiner |
|---|---|---|
| The Hague | 29 October 2007 | Bondar, Daniela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 07 11 6086

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2007

| Patent document cited in search report | | Publication date | Patent family member(s) | | Publication date |
|---|---|---|---|---|---|
| US 4497841 | A | 05-02-1985 | NONE | | |
| US 5084295 | A | 28-01-1992 | AT | 132700 T | 15-01-1996 |
| | | | AU | 669090 B2 | 23-05-1996 |
| | | | AU | 1657395 A | 29-06-1995 |
| | | | AU | 660275 B2 | 22-06-1995 |
| | | | AU | 7254691 A | 21-08-1991 |
| | | | CA | 2073774 A1 | 03-08-1991 |
| | | | DE | 69116344 D1 | 22-02-1996 |
| | | | DE | 69116344 T2 | 11-07-1996 |
| | | | DK | 513187 T3 | 10-06-1996 |
| | | | EP | 0513187 A1 | 19-11-1992 |
| | | | ES | 2082195 T3 | 16-03-1996 |
| | | | FI | 910510 A | 03-08-1991 |
| | | | GR | 3018638 T3 | 30-04-1996 |
| | | | IE | 910359 A1 | 14-08-1991 |
| | | | JP | 5503426 T | 10-06-1993 |
| | | | JP | 3095772 B2 | 10-10-2000 |
| | | | PT | 96642 A | 31-10-1991 |
| | | | TR | 25253 A | 01-01-1993 |
| | | | WO | 9111109 A1 | 08-08-1991 |
| EP 1716762 | A | 02-11-2006 | NONE | | |
| WO 9213465 | A | 20-08-1992 | AU | 1434492 A | 07-09-1992 |
| EP 1673980 | A | 28-06-2006 | NONE | | |
| WO 9524132 | A | 14-09-1995 | AU | 1840995 A | 25-09-1995 |
| | | | CA | 2183168 A1 | 14-09-1995 |
| | | | US | 5486372 A | 23-01-1996 |
| US 5112626 | A | 12-05-1992 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Ice Cream. 2003, 69
- **GONZALEZ et al.** *J. Dairy Science,* 2003, vol. 86, 70-77
- Ice Cream. Kluwer Academic/Plenum Publishers, 2003
- **FEARON et al.** *J. Sci Food Agric.,* 2004, vol. 84, 497-504
- Ice Cream
- *J. Sci Food Agric.,* 2004, vol. 84, 497-504